# EUROPEAN PATENT APPLICATION

(11) **EP 3 647 156 A1**
(43) Date of publication of application: **06.05.2020**
(21) Application number: 18203765.5
(22) Date of filing: 31.10.2018
(51) Int. Cl.: B62D 3/12, F16C 29/02, F16H 55/26

(54) **STEERING GEAR FOR A VEHICLE**

(71) Applicant: ZF Automotive Germany GmbH, 73553 Alfdorf (DE)
(72) Inventor: Pallara, Emanuele, 73553 Alfdorf (DE)
(74) Representative: Prinz & Partner mbB

(57) **Abstract**

A steering gear (10) for a vehicle comprises a rack-and-pinion-mechanism (20), a gear housing (28) encasing the rack-and-pinion-mechanism (20), an outer bushing (30), and an inner bushing (32), wherein the inner bushing (32) is at least partially received inside the outer bushing (30) and slidingly supports the rack (24). On the lateral outside surface of the inner bushing (32) or on the lateral inside surface of the outer bushing (30), a first protrusion (58) is provided having a top surface, which is inclined with respect to a corresponding central axis. The first protrusion (58) is received in a corresponding first slot (50) being provided on a lateral inside surface of the outer bushing (30) or a lateral outside surface (56) of the inner bushing (32), the first slot (50) having a ground surface, which is inclined with respect to a corresponding central axis. The top surface and the ground surface are inclined in corresponding directions and abut against each other.

## Description

The invention relates to a steering gear for a vehicle, comprising a rack-and-pinion-mechanism, wherein a pinion thereof is adapted to be functionally coupled to a steering wheel and a rack thereof is adapted to be functionally coupled to at least one steerable wheel of the vehicle, a gear housing encasing the rack-and pinion-mechanism, an outer bushing, wherein a lateral outside surface of the outer bushing is supported in the gear housing, and an inner bushing, wherein the inner bushing is at least partially received inside the outer bushing and wherein a lateral inside surface of the inner bushing slidingly supports the rack.

The aim of a steering gear of this kind generally is to transform a pinion revolution into a sliding movement of the rack.

Such a steering gear is known from JP 2012-245810 A. The inner and outer bushings thereof are used to support the rack inside the gear housing. Furthermore, by pushing the inner and outer bushings against each other, the rack can be preloaded against the pinion. This mechanism is adjustable.

Other steering gears of similar functionality are known from EP 1 787 890 A1 or EP 1 711 390 B1.

The object of the present invention is to further improve steering gears of the type mentioned above. Especially, a steering gear shall be described which is able to support and position the rack in a very precise manner. Furthermore, the preloading of the rack against the pinion shall be well defined in order to ensure reliable interaction between rack and pinion in every situation, e. g. also when exposed to vibrations. Additionally, the positioning and the preloading shall be easily adjustable. Moreover, the steering gear shall have a simple structure and be producible at low costs.

The object is achieved by a steering gear for a vehicle of the type mentioned above, wherein on a lateral outside surface of the inner bushing or on a lateral inside surface of the outer bushing, a first protrusion is provided which extends generally parallel to a central axis of the inner bushing or a central axis of the outer bushing respectively, the first protrusion having a top surface which is inclined with respect to the corresponding central axis, wherein the first protrusion is received in a corresponding first slot being provided on the lateral inside surface of the outer bushing or on the lateral outside surface of the inner bushing and extending generally parallel to the central axis of the outer bushing or the central axis of the inner bushing respectively, the first slot having a ground surface which is inclined with respect to the corresponding central axis, the top surface and the ground surface being inclined in corresponding directions and abutting against each other.

The mechanism for supporting, positioning and preloading the rack, thus, essentially relies on the top surface and the ground surface being in contact with each other. By sliding the inclined ground surface and the inclined top surface with respect to each other in the direction of the central axis of the bushings, a distance between the central axis of the outer bushing and the central axis of the inner bushing can be adjusted.

Consequently, a position of the rack inside the gear housing can be regulated. If the rack is pushed against the pinion, the preload can be increased at the same time. Otherwise, the preload is decreased.

Preferably, the lateral inside surface of the inner bushing has a form of a circular cylinder or a gothic arc. This means that a cross section of the lateral inside surface has the form of a circle or a gothic arc. The portion of the rack being supported in the inner bushing has a corresponding form, i.e. a cross section of the rack has the form of a circle or a gothic arc respectively. Alternatively, racks with a V-shaped or Y-shaped cross sections can be used. In this case also the lateral inside surface of the inner bushing has the form of a V or Y, when seen in cross section.

Advantageously, all lateral surfaces of the first protrusion and the first slot are parallel to the central axis of the corresponding bushing.

Furthermore, all lateral surfaces of the first protrusion and the first slot preferably are essentially parallel to each other. This means that both the first protrusion and the first slot have substantially a rectangular cross section. The inclination angles of the top surface and the ground surface can essentially be the same. The top surface and the ground surface, both being the essential functional surfaces, can be plane and represent a restricted portion of the respective bushing only. Therefore, these surfaces can be manufactured with high precision. Especially when compared to the state of the art, where wide and/or curved functional surfaces are used, production of the ground and the top surfaces is relatively easy and low cost. Nevertheless, positioning of the rack is very precise. The same is true for its preloading against the pinion.

According to an embodiment, at least one second protrusion is provided on the lateral outside surface of the inner bushing or on the lateral inside surface of the outer bushing, which at least one second protrusion extends generally parallel to the central axis of the inner bushing or the central axis of the outer bushing respectively, the second protrusion having a top surface, which is generally parallel to the corresponding central axis, wherein the second protrusion is received in a corresponding second slot being provided on the lateral inside surface of the outer bushing or the lateral outside surface of the inner bushing and extending generally parallel to the central axis of the outer bushing or the central axis of the inner bushing respectively, the second slot having a ground surface which is generally parallel to the corresponding central axis. Depending on the relative position of the inner bushing and the outer bushing, the top surface of the second protrusion and the ground surface of the second slot may or may not abut against each other. Again, the lateral surfaces of the second protrusion and the second slot can be parallel to the central axis of the respective bushings. Therefore, also the second protrusion and the second slot generally can have a rectangular cross section. The second slot and the second protrusion will thus operate as a guiding means which allows for precise and smooth relative movement of the inner bushing with respect to the outer bushing. Unintentional wedging or blocking of the bushings with respect to each other can be successfully prevented. This allows for precise positioning and preloading of the rack. Furthermore, the adjusting activity is simple and smooth.

In an alternative the top surface of the second protrusion is inclined with respect to the corresponding central axis and the ground surface of the second slot is inclined with respect to the corresponding central axis. The top surface and the ground surface are inclined in corresponding directions and with corresponding inclination angles. The top surface and the ground surface abut against each other. The inclination can have the same or a different orientation compared to the inclination of the top surface of the first protrusion and the ground surface of the first slot. Also the inclination angles can differ. Also in this alternative, the inner bushing and the outer bushing are positioned in a very precise manner. Consequently, the rack can also be precisely positioned an preloaded.

The first protrusion and the first slot can be wider than the second protrusion and the second slot, respectively, when seen in the direction of the corresponding central axis. Consequently, the inner bushing and the outer bushing can only be mounted in one single way (Poka Yoke). When, by accident, trying to mount the inner bushing in a wrong orientation, the second protrusion will not be able to enter into the first slot. As a result, the manufacturing process is fail self-explanatory and therefore can be performed quickly.

Preferably, the second protrusion is located opposite the first protrusion on the inner bushing or on the outer bushing and/or the second slot is located opposite the first slot on the outer bushing or on the inner bushing. It is also clear that the angular offset between the first and the second protrusion always has to match the angular offset between the first and the second slots. This design makes the bushings easy to manufacture and comparatively stable in a mechanical sense.

Advantageously, the first protrusion generally extends over the entire axial length of the inner bushing or the outer bushing and/or the first slot generally extends over the entire axial length of the outer bushing or the inner bushing. Preferably, the same is true for the second protrusion and the second slot. As a result of this arrangement, the bushings are easy to manufacture. Furthermore, the protrusions and the slots are mechanically stable, which leads to a high service life of the steering gear.

It is also possible that the first protrusion only extends over a portion of the axial length of the inner bushing and/or the first slot only extends over a portion of the axial length of the outer bushing. The same can apply to the second protrusion and the second slot. In a preferred embodiment, the first protrusion and the second protrusion are located in a middle section of the inner bushing, i.e. only extend in a middle area of the inner bushing, and the corresponding slots extend over the entire axial length of the outer bushing. This variant is easy to manufacture and to assemble. According to a variant, on the lateral outside surface of the outer bushing an anti-rotation protrusion is provided, being received in a corresponding anti-rotation depression on the gear housing in order to prevent rotation of the outer bushing with respect to the gear housing. An alternative term for "anti-rotation" can be "angular positioning". Consequently, the outer bushing is received in a well-defined position with respect to the gear housing. This is a prerequisite of a defined position of the inner bushing and thus the rack. This will eventually lead to a defined preload and a smooth adjusting mechanism. The anti-rotation protrusion can have a rectangular cross section. Preferably, the anti-rotation protrusion does not extend over the full axial length of the outer bushing.

The first protrusion and the first slot and/or the second protrusion and the second slot can act as an anti-rotation-mechanism between the inner bushing and the outer bushing. Again, an alternative term for "anti-rotation" may be "angular positioning". Consequently, the first and the second bushings have a well-defined angular position with respect to each other. As a consequence thereof, also the rack can be supported in a well-defined position. Furthermore, a well-defined preload can be applied to the rack in the exact direction of the pinion.

In an embodiment, the outer bushing and/or the inner bushing has/have the form of a circumferentially closed circular ring. This excludes slots or openings on the circumference of the bushings. Consequently, the bushings are mechanically stable. As mechanical load resulting for example from the rack can be distributed over a larger volume or surface of material, the bushings are less prone to wear. This means that the steering gear operates in a very reliable manner and has a long service life.

Furthermore, at least one resilient element, preferably an O-ring or a rubber band, can be radially interposed between the lateral outside surface of the outer bushing and the gear housing. In order to position the resilient element, a circumferential notch can be provided on the outside surface of the outer bushing. In a preferred embodiment, more than one resilient element, especially two or three O-rings, is provided. The use of such a resilient element has two effects. First, the resilient element can function as a dampening means, when the steering gear is exposed to vibrations, especially when the outer bushing or the rack vibrates with respect to the gear housing. Second, by using the resilient element the outer bushing is positioned and secured in a well-defined location on the gear housing. No further assembly elements are necessary. Additionally, the resilient element can provide a sealing functionality. Thus, the outer bushing is sealed with respect to the gear housing preventing for example water and dirt from entering the gap between these two parts.

Additionally, the inner bushing and the outer bushing can be axially loaded against each other via a spring, preferably a spring washer. Thereby, the top surface and the ground surface abut against each other and a specific relative position of the inner bushing to the outer bushing will result. The relative position will be such that the spring force is equilibrated by the other forces taking effect on the bushings and the rack, especially the counter force of the preload being applied to the rack. By using such a spring, an essentially constant force is applied on the bushings and a predefined and essentially constant preload of the rack against the pinion can be maintained also in case of wear and other environmental effects. Therefore, a very reliable operation of the steering gear is guaranteed.

One side of the spring can abut against a shoulder in the gear housing and an opposite side of the spring can abut against the outer bushing or the inner bushing, preferably the outer bushing. Using this design, an ordinary spring washer can be used, which is very cost-efficient. Furthermore, the effective path of spring force application is direct, i.e. does not comprise changes in orientation. Consequently, the steering gear can be realized using relatively few parts. Additionally, the steering gear is compact in design.

Preferably, the spring, the inner bushing and the outer bushing form a re-adjustment mechanism adapted to re-adjust the position and/or the preload of the rack and being powered by a pretension force of the spring. As already explained above, the outer bushing and the inner bushing are loaded against each other by the pretension force of the spring, which is substantially constant. The application of the pretension force results in the fact that the rack is preloaded against the pinion by a substantially constant force. This also results in a substantially constant position of the rack with respect to the pinion. The pretension force of the spring will remain constant in case of wear on the inner bushing, the outer bushing, the rack, the pinion and/or the gear housing. The same is true in case one of the elements mentioned before is deformed. Consequently, also in case of deformation and/or wear, the preload of the rack against the pinion is kept constant. In other words, it is re-adjusted. The same is true for the position of the rack.

The steering gear may comprise a tensioning plug being threadingly engaged to the gear housing and abutting against the outer bushing or the inner bushing, preferably the inner bushing, wherein the tensioning plug is movable in a direction generally parallel to the central axis of the inner bushing and/or the central axis of the outer bushing when being rotated with respect to the gear housing. The tensioning plug, thus, will move in a direction parallel to the central axis, when being rotated. Thereby, the spring will be expanded or compressed, depending on the sense of rotation. The preferable effective path of the force applied by the tensioning plug is: tensioning plug - inner bushing - outer bushing - spring - shoulder. This means that, when rotating the plug, an axial force is transmitted to the inner bushing which is pushed to the inside of the outer bushing. Thereby the ground surface and the top surface may slide with respect to each other. Finally, the spring, which is located between the outer bushing and the shoulder in the gear housing counteracts the force. As the top surface and the ground surface are inclined, this axial force at least partially is converted into a radial force pushing the rack against the pinion, i.e. preloading the rack against the pinion. Consequently, by rotating the tensioning plug position and preload of the rack can be adjusted.

Advantageously, the tensioning plug comprises an engagement feature which is adapted to receive a tool for rotating the tensioning plug. For example, the engagement feature can comprise two or more blind holes being arranged on an outside of the tensioning plug.

Preferably, the tensioning plug comprises an abutment surface being adapted to interact with the rack in order to limit a range of motion thereof. Often, such a mechanism is called "lock stop". In limiting the range of motion, constant interaction of the rack and the pinion is ensured. Therefore, the steering gear can be operated in a secure and reliable way. Furthermore, with the abutment surface unintended operational states of the steering gear are avoided.

A method for assembling a steering gear according to the invention may comprise one or more of the following steps:
a) providing the gear housing,
b) fitting a first bearing to the gear housing, wherein the first bearing is adapted to support an input shaft of the steering gear,
c) inserting the spring into the gear housing,
d) fitting one or more resilient elements on the external bushing,
e) inserting the outer bushing together with the resilient element or the resilient elements thereon into the gear housing, thereby inserting the anti-rotation protrusion of the outer bushing into the corresponding depression on the gear housing,
f) mounting the inner bushing to the gear housing, thereby positioning the first protrusion inside the first slot of the outer bushing and optionally the second protrusion inside the second slot of the outer bushing,
g) inserting the rack into the gear housing,
h) fitting a second bearing on the input shaft,
i) mounting the input shaft, which carries the pinion and the second bearing, to the gear housing,
j) threadingly engaging the tensioning plug to the gear housing, and
k) assembling the ball joint to the rack.

In a fully assembled state the top surface of the first protrusion and the ground surface of the first slot abut against each other. Such a method is relatively simple to perform.

Different embodiments of the invention are shown in the attached drawings.
- Figure 1 shows a steering gear according to the invention in a schematic draft,
- Figure 2 shows another view of the steering gear according to the invention,
- Figure 3 shows the steering gear of Fig. 2 in a cross sectional view III-III according to a first embodiment,
- Figure 4 shows the steering gear of Fig. 3 in a cross sectional view IV-IV,
- Figure 5 shows the steering gear of Figs. 3 to 4 in an exploded view,
- Figure 6 shows an outer bushing of the steering gear of Figs. 3 to 5 in a perspective view,
- Figure 7 shows the outer bushing of Fig. 8 in a cross sectional view VII-VII,
- Figure 8 shows the outer bushing of Fig. 6 in an elevational view,
- Figure 9 shows an inner bushing of the steering gear of Figs. 3 to 5 in a perspective view,
- Figure 10 shows the inner bushing of Fig. 11 in a cross sectional view X-X,
- Figure 11 shows the inner bushing of Fig. 9 in an elevational view,

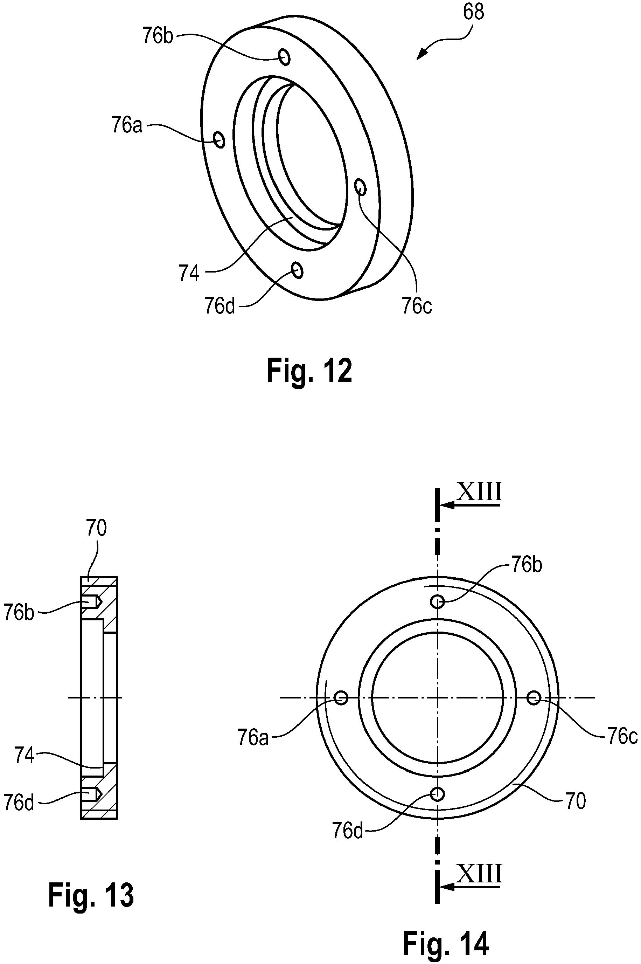

- Figure 12 shows a tensioning plug of the steering gear of Figs. 3 to 5 in a perspective view,
- Figure 13 shows the tensioning plug of Fig. 14 in a cross sectional view XIII-XIII,
- Figure 14 shows the tensioning plug of Fig. 12 in an elevational view,
- Figure 15 shows a steering gear according to a second embodiment of the invention,
- Figure 16 shows the steering gear of Figure 15 in a front view,
- Figure 17 shows the steering gear of Figure 16 in a cross sectional view XVII-XVII,
- Figure 18 shows the steering gear of Figure 17 in a cross sectional view XVIII-XVIII,
- Figure 19 shows the steering gear of Figures 15 to 18 in an exploded view,
- Figure 20 shows an outer bushing of the steering gear of Figures 15 to 19 in a perspective view,
- Figure 21 shows a front view of the outer bushing of Figure 20,
- Figure 22 shows the outer bushing of Figure 21 in a cross sectional view XXII-XXII,
- Figure 23 shows a detail XXIII of the outer bushing of Figure 22,
- Figure 24 shows the outer bushing of Figure 22 in a cross sectional view XXIV-XXIV,
- Figure 25 shows an inner bushing of the steering gear of Figures 15 to 19 in a perspective view,
- Figure 26 shows a front view of the inner bushing of Figure 25,
- Figure 27 shows a detail XXVII of the inner bushing of Figure 26,
- Figure 28 shows the inner bushing of Figure 26 in a cross sectional view XXVIII-XXVIII,
- Figure 29 shows the inner bushing of Figure 28 in a cross sectional view XXIX-XXIX,
- Figure 30 shows a tensioning plug the steering gear of Figures 15 to 19 in a perspective view,
- Figure 31 shows the tensioning plug of Figure 30 in a front view,
- Figure 32 shows the tensioning plug of Figure 31 in a cross sectional view XXXII-XXXII,
- Figure 33 shows a spring of the steering gear of Figures 15 to 19 in a perspective view,
- Figure 34 shows the spring of Figure 33 in a cross sectional view,
- Figure 35 shows a resilient element of the steering gear of Figures 15 to 19 in a perspective view,
- Figure 36 shows the resilient element of Figure 35 in a cross sectional view,
- Figure 37 shows a steering gear according to a third embodiment of the invention in a front view,
- Figure 38 shows the steering gear of Figure 37 in a cross sectional view XXXVIII-XXXVIII and
- Figure 39 shows the steering gear of Figures 37 and 38 in an exploded view.

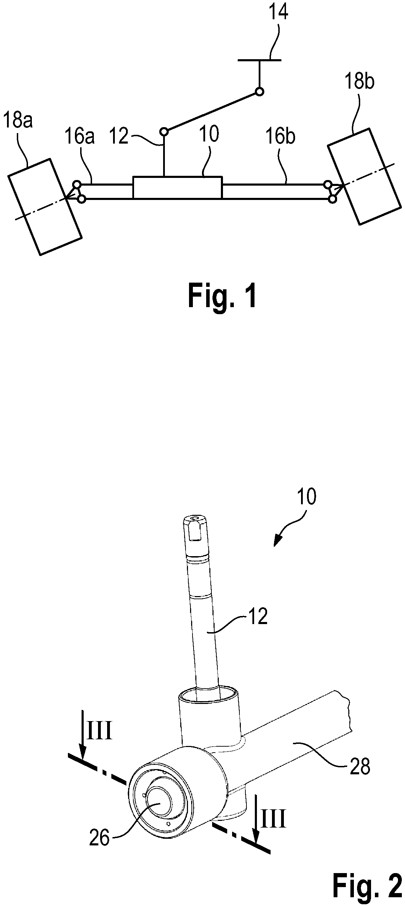

Figure 1 shows a steering gear 10 for a vehicle.

An input shaft 12 thereof is coupled to a steering wheel 14.

Furthermore, the steering gear 10 is coupled to two output bars 16a, 16b which are each linked to a steerable wheel 18a, 18b, respectively.

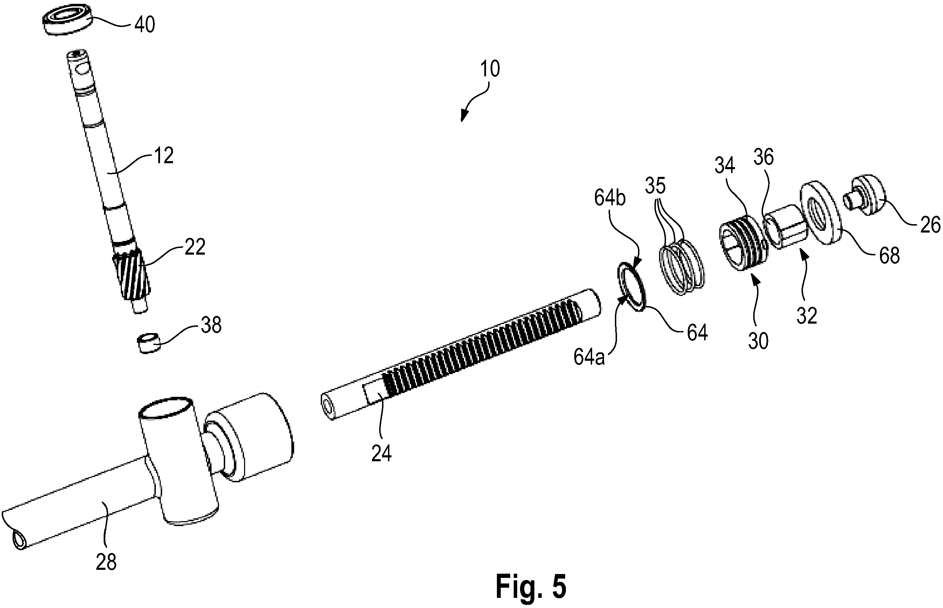

Figures 2 to 5 show the steering gear 10 in more detail.

The core element of the steering gear 10 is a rack-and-pinion-mechanism 20 which comprises a pinion 22 being connected to the input shaft 12, and a rack 24.

The rack 24 is adapted to be coupled to the output bars 16a, 16b via a ball joint 26 (only partly shown).

A gear housing 28 encases the rack-and-pinion-mechanism 20.

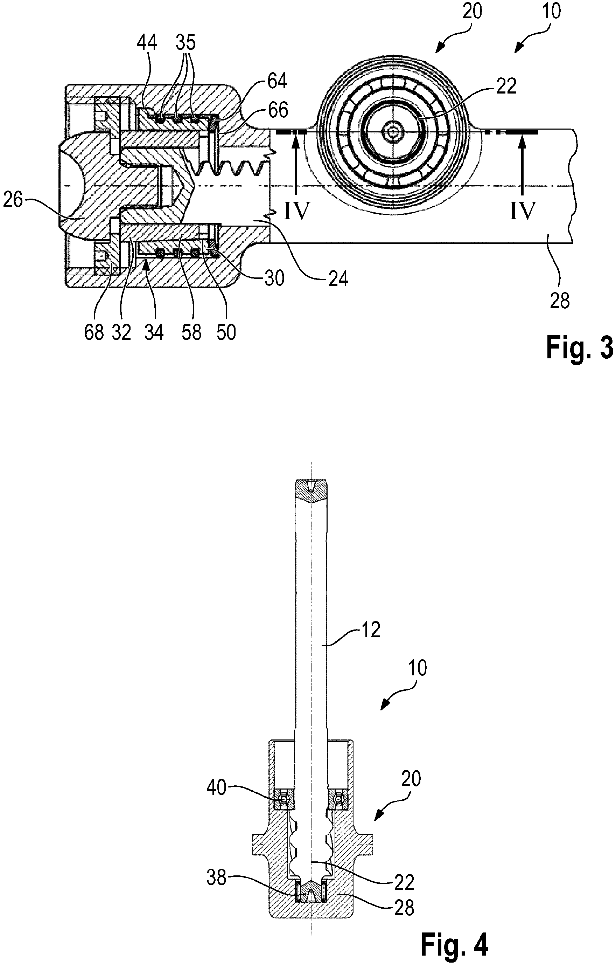

As can be seen best in Figure 3, the steering gear 10 also comprises an outer bushing 30 and an inner bushing 32, wherein the inner bushing 32 is at least partially received inside the outer bushing 30.

A lateral outside surface 34 of the outer bushing 30 is supported in the gear housing 28.

In the embodiment shown, three resilient elements 35 in the form of O-rings are interposed between the outside surface 34 and the gear housing 28.

A lateral inside surface 36 of the inner bushing slidingly supports the rack 24.

The input shaft 12 is supported in the housing 28 via a first bearing 38 and a second bearing 40.

The inner bushing 32 and the outer bushing 30 perform a dual task: Positioning the rack 24 inside the gear housing 28, especially with respect to the pinion 22, and preloading the rack 24 against the pinion 22 in order to ensure pinion engagement also in case of vibration and wear.

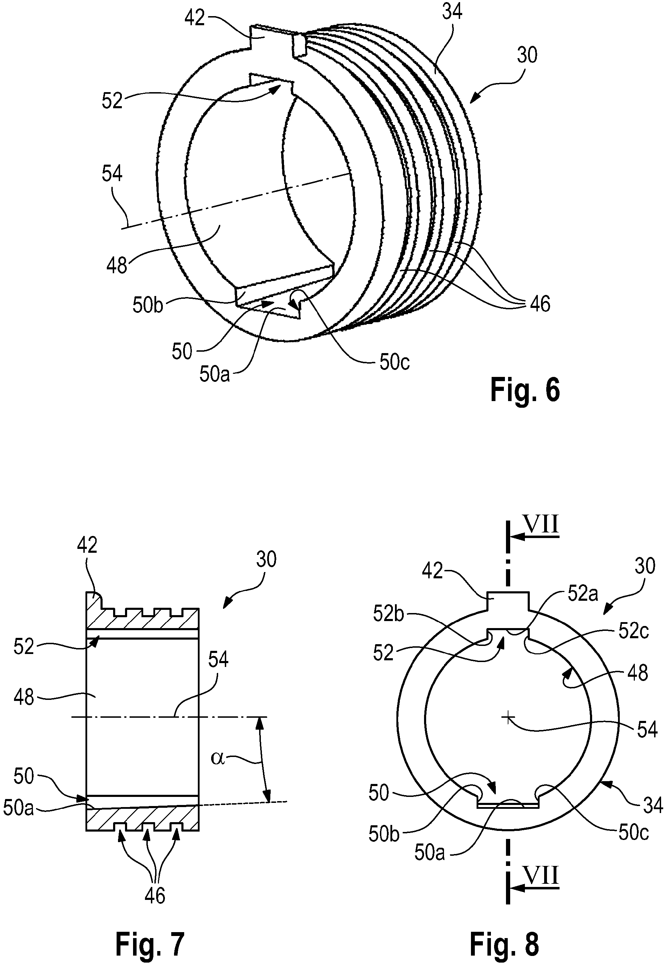

The outer bushing 30 has the form of a circular ring and is circumferentially closed (cf. Figs. 6 to 8).

For being maintained in a well-defined position with respect to the gear housing 28, an anti-rotation protrusion 42 is provided on the lateral outside surface 34 of the outer bushing 30. It is received in a corresponding anti-rotation depression 44 on the gear housing 28. Thereby, rotation of the outer bushing 30 with respect to the gear housing 28 is prevented.

Each of the resilient elements 35 is received in a corresponding circumferential notch 46 on the lateral outside surface 34.

On a lateral inside surface 48 of the outer bushing 30, a first slot 50 and a second slot 52 are provided.

Both slots 50, 52 generally extend parallel to a central axis 54 of the outer bushing 30.

The first slot has a ground surface 50a which is inclined by an angle α with respect to the central axis 54.

The lateral surfaces 50b, 50c of the first slot are essentially parallel to the central axis 54.

As far as the second slot 52 is concerned, its ground surface 52a and both lateral surfaces 52b and 52c are essentially parallel to the central axis 54.

Seen in the direction of the central axis 54, the first slot 50 is wider than the second slot 52. In alternative embodiments, the slots 50, 52 also can have substantially the same width.

In the example shown, the first slot 50 and the second slot 52 are located opposite each other.

Both slots 50, 52 extend over the entire axial length of the outer bushing 30.

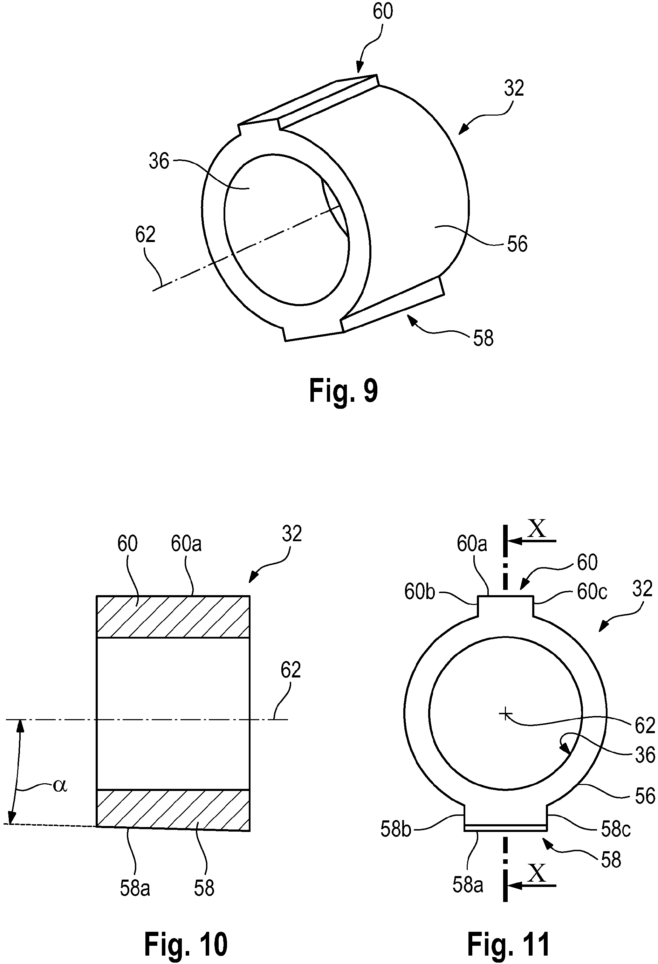

Also the inner bushing 32 has the form of a circular ring and is circumferentially closed (cf. Figs. 9 to 11)

On its lateral outside surface 56, the inner bushing 32 has a first protrusion 58 and a second protrusion 60.

Both protrusions 58, 60 extend generally parallel to a central axis 62 of the inner bushing 32.

A top surface 58a of the first protrusion 58 is inclined by an angle α with respect to the central axis 62.

This angle α corresponds to the angle α by which the ground surface 50a is inclined with respect to the central axis 54.

Both lateral surfaces 58b and 58c extend generally parallel to the central axis 62.

The surfaces delimiting the second protrusion 60, namely top surface 60a and lateral surfaces 60b and 60c, also extend parallel to the central axis 62.

Analogous to the slots 50, 52 of the outer bushing 30, the first protrusion 58 is wider than the second protrusion 60. Also the protrusions 58, 60 can have substantially the same width in alternative embodiments.

Furthermore, the first protrusion 58 and the second protrusion 60 are located opposite each other.

Both extend over the entire axial length of the inner bushing 32.

In an assembled state of the steering gear 10, when the inner bushing 32 is received inside the outer bushing, the first protrusion 58 is received inside the first slot 50. Thereby, the top surface 58a and the ground surface 50a abut against each other.

Additionally, in the example shown, the second protrusion 60 is received inside the second slot 52.

As the widths of the slots 50, 52 and the protrusions 58, 60 differ in the way mentioned above, the inner bushing 32 can only be received in one predefined orientation inside the outer bushing 30 (Poka Yoke).

Furthermore, the first protrusion 58 being received in the first slot 50 and the second protrusion 60 being received inside the second slot 52 act as an anti-rotation-mechanism between the inner bushing 32 and the outer bushing 30. Put otherwise, rotation of the inner bushing 32 with respect to the outer bushing 30 is inhibited.

It has to be noted that the lateral inside surface 48 of the outer bushing 30, which is generally cylindrical, has a slightly greater diameter than the lateral outside surface 56 of the inner bushing 32.

In addition, a radial extension of the second protrusion 60 is smaller than a radial depth of the second slot 52.

This intentionally allows for radial play between the inner bushing 32 and the outer bushing 32, wherein the intended direction of play corresponds to inserting the second protrusion 60 radially deeper into the second slot 52.

A spring 64, in the example shown a spring washer, is interposed between the gear housing 28 and the outer bushing 30 (cf. Fig. 3).

More precisely, one side 64a of the spring 64 abuts against a shoulder 66 in the gear housing 28 and an opposite side 64b of the spring 64 abuts against an axial side surface of the outer bushing 30.

Thereby, the inner bushing 32 and the outer bushing 30 are axially loaded against each other via the spring 64.

In order to be able to adjust a desired amount of load or preload, a tensioning plug 68 is provided.

It threadingly engages the gear housing 28 and abuts against the inner bushing 32.

The threading engagement is realized via an external thread 70 on the tensioning plug 68 and an internal thread 72 on the gear housing 28.

When being rotated with respect to the gear housing 28, the tensioning plug 68 is movable in a direction generally parallel to the central axis 54 of the outer bushing 30 or the central axis 62 of the inner bushing 32.

In the example shown, the central axis 54 and the central axis 62 extend essentially in the same direction.

Furthermore, the tensioning plug 68 comprises an abutment surface 74, which is adapted to interact with the rack 24, more precisely with the ball joint 26 assembled thereon, in order to limit a range of motion of the rack 24.

The tensioning plug 68 also comprises a tool interaction feature 76, which is adapted to be engaged by a tool for rotating the tensioning plug 68 with respect to the gear housing 28.

In the example shown, the tool interaction feature 76 comprises four blind holes 76a to 76d.

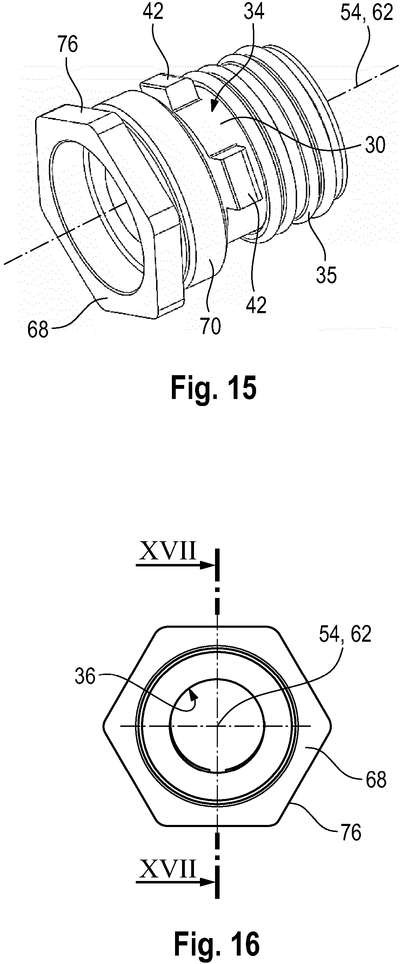

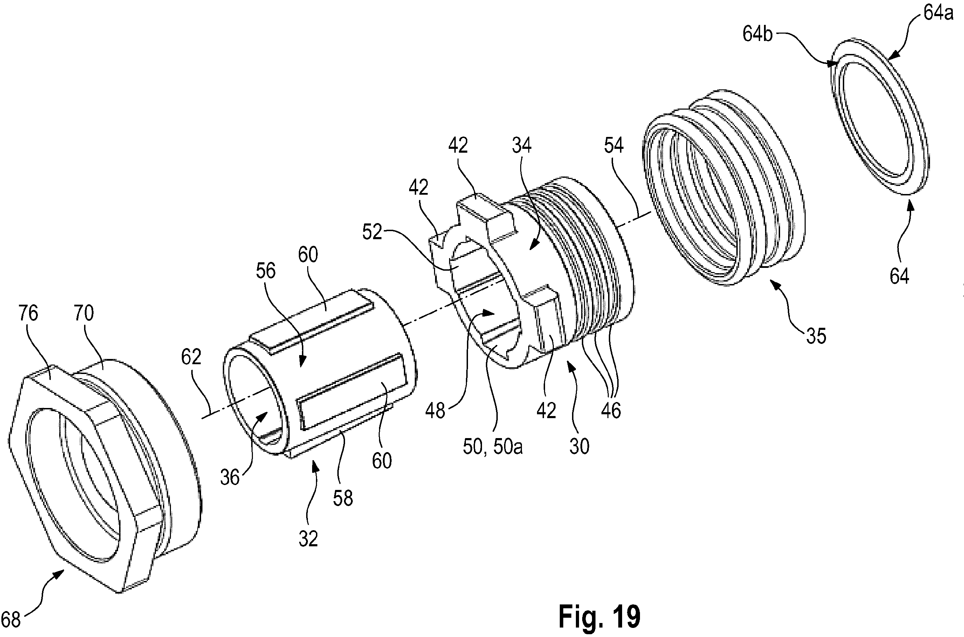

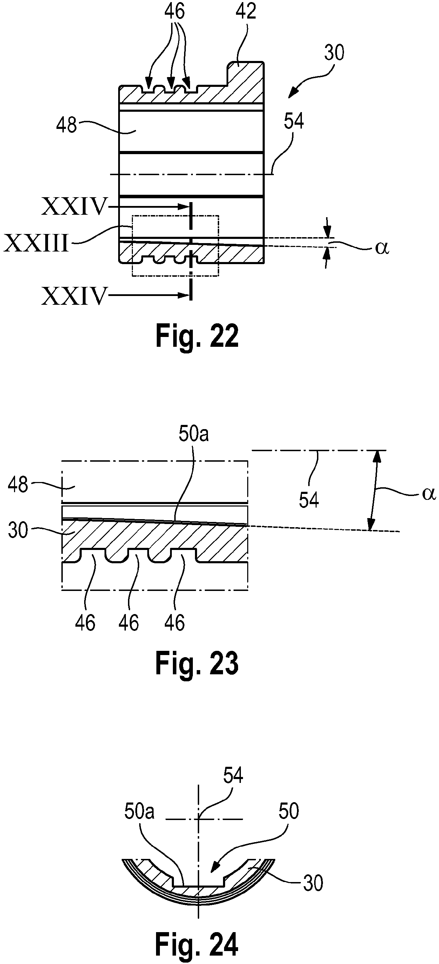

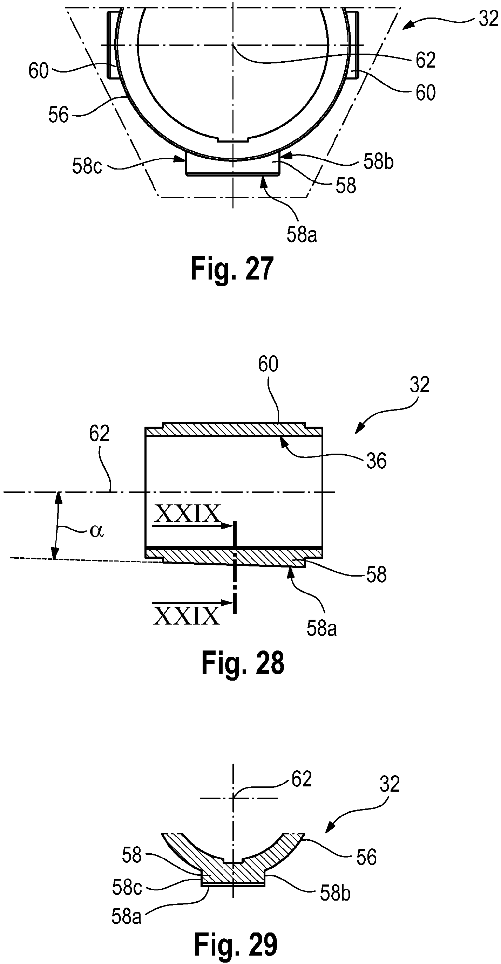

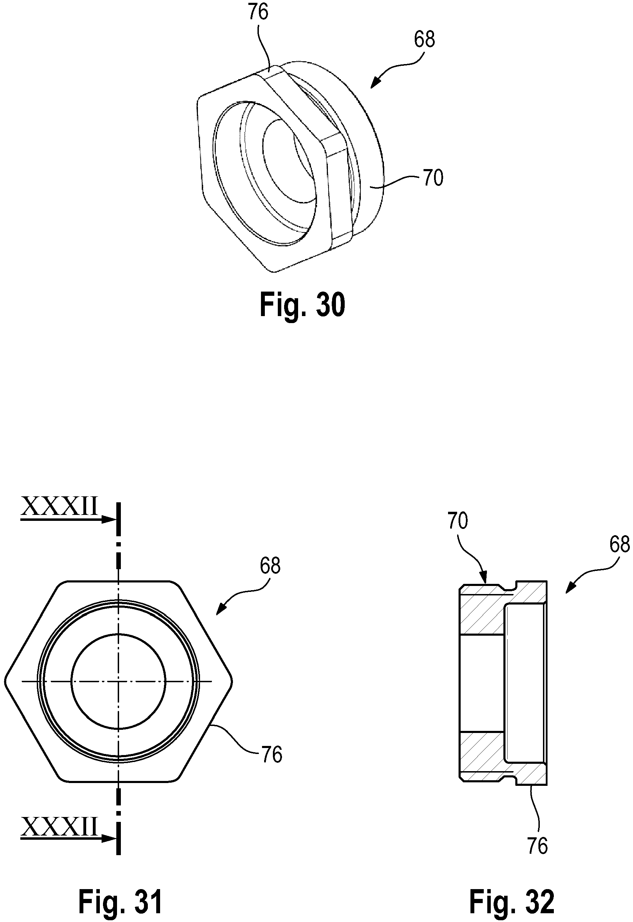

A second embodiment of the steering gear 10 is shown in figures 15 to 36. In the following only the differences to the first embodiment will be explained.

Also, for visibility reasons, the gear housing 28 and the rack-and-pinion-mechanism 20 are omitted in the drawings.

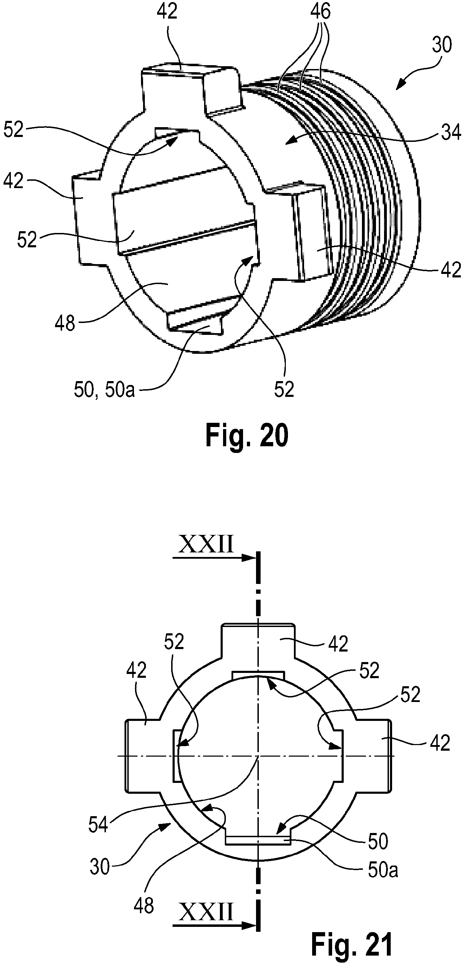

The outer bushing 30, which is shown in detail in Figures 20 to 24, now is equipped with three anti-rotation protrusions 42. They engage corresponding depressions 44 in the gear housing 28, when the steering gear 10 is assembled. Thereby, rotation of the outer bushing 30 with respect to the gear housing 28 is inhibited.

Furthermore the outer bushing 30 disposes of three second slots 52 which serve as guiding means for the inner bushing 32. Together with the first slot 50, four slots 50, 52 are formed on the outer bushing.

The slots 50, 52 are evenly distributed over the circumference of the outer bushing, i.e. neighboring slots 50, 52 are spaced from each other by a 90° angle.

This results in the fact that the slots are opposing each other pairwise.

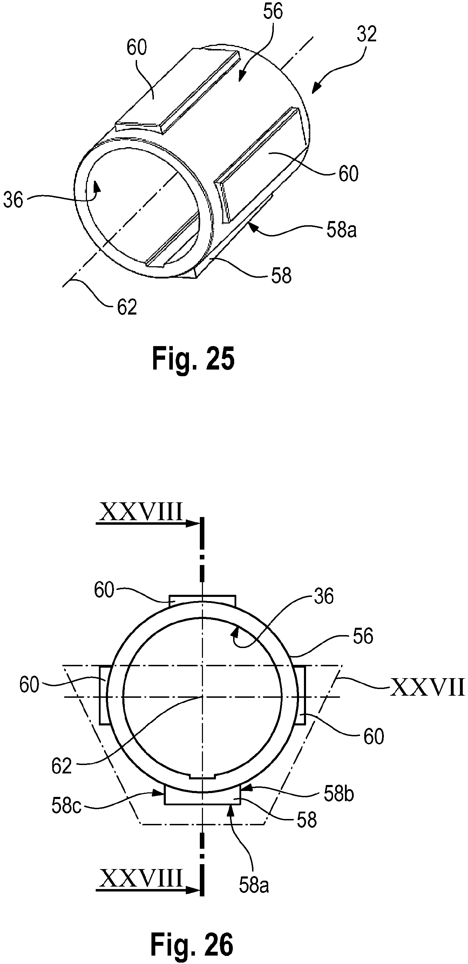

As far as the inner bushing 32 is concerned, three second protrusions 60 are provided in addition to one single first protrusion 58 (cf. Figures 25 to 29). Consequently, four protrusions 58, 60 are provided in total.

The protrusions 58, 60 are distributed over the circumference of the inner bushing 32 in a manner corresponding to the distribution of the slots 50, 52 on the outer bushing.

As in the embodiment described before, the second protrusions 60 engage the second slots 52 and the first protrusion 58 interacts with the first slot 50.

In contrast to the first embodiment, the first protrusion 58 and the second protrusions 60 do not span over the entire axial length of the inner bushing 32, but only extend in a middle section.

Also the tensioning plug 68 is modified with respect to the previous embodiment. The tool interaction feature 76 now is a hexagonal element being adapted to cooperate with an open-end wrench.

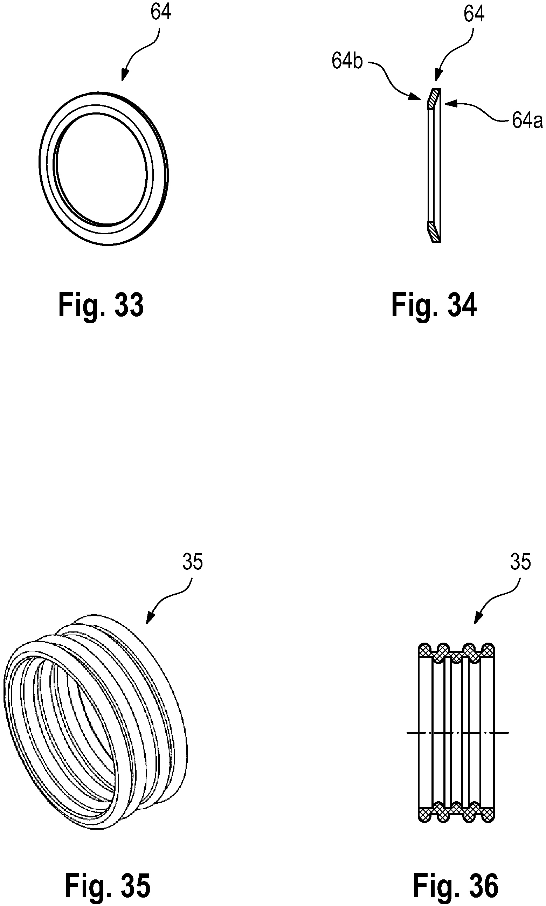

The resilient element 35 now has the form of a rubber band (cf. Figs. 35 and 36).

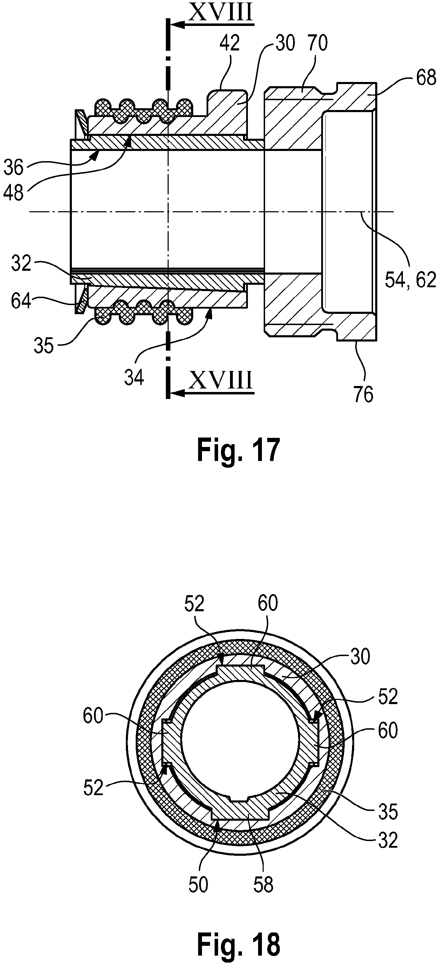

As can be seen from Figure 17, is it adapted to cooperate with the notches 46 provided on the outer bushing 30. Consequently, the three O-rings of the first embodiment can be replaced easily by the rubber band.

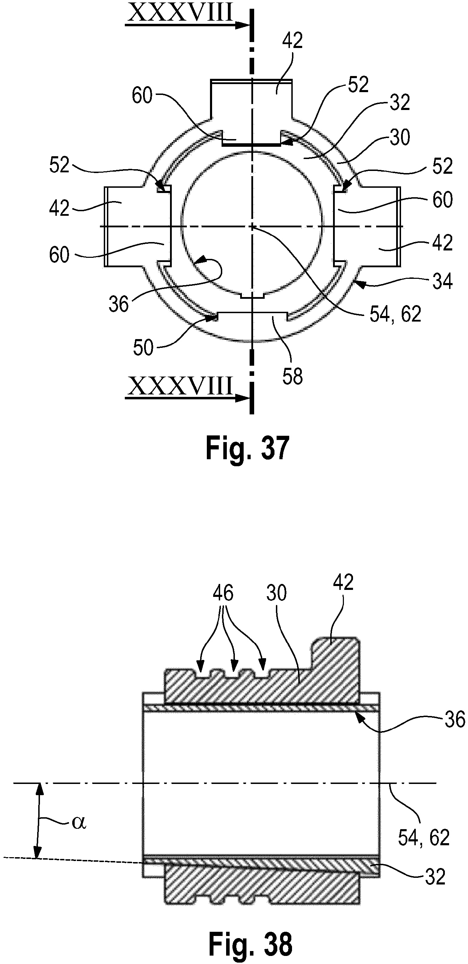

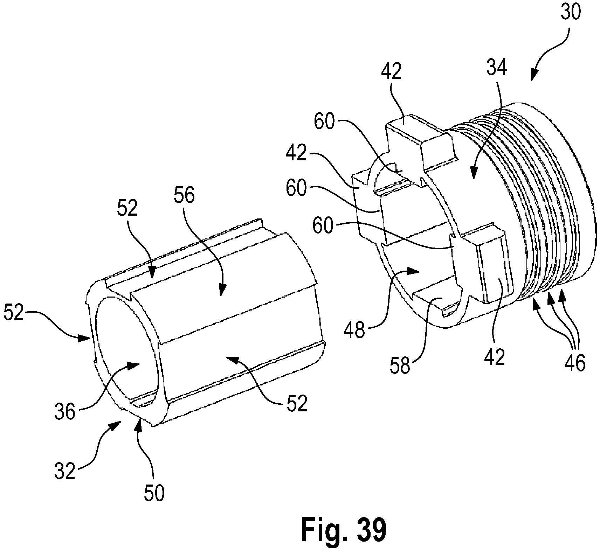

Figures 37 to 39 show a third embodiment of the steering gear 10. Again, only the differences to the previous embodiments will be explained.

For illustrative purposes only the outer bushing 30 and the inner bushing 32 are shown.

Essentially, the third embodiment differs from the second embodiment in that the first protrusion 58 and second protrusions 60 are provided on the outer bushing 30 and the first slot 50 and the second slots 52 are provided on the inner bushing 32.

Consequently, the third embodiment can be considered the kinematic reversion of the second embodiment.

The steering gear 10 according to all of the embodiments mentioned above can be assembled as follows.

First of all the gear housing 28 is provided.

Then, the first bearing 38 is fitted to its place in the gear housing 28.

Furthermore, the spring 64 is inserted into the gear housing 28.

At the same time or subsequently, the resilient element 35 is fitted on the external bushing 30. More precisely, the resilient element 35 is mounted on the notches 46.

After that, the external bushing 30 together with the resilient element 35 mounted thereon is inserted into the gear housing 28. In doing so, care is taken to the angular orientation of the external bushing 30. In this context, the anti-rotation protrusion 42 is inserted into the corresponding depression 44. Thereby, a well-defined angular position of the external bushing 30 with respect to the gear housing 28 is achieved.

After this, the inner bushing 32 is mounted. Thereby, the first protrusion 58 is positioned inside the first slot 50 of the outer bushing 30 and the second protrusion 60 is located inside the second slot 52 of the outer bushing 30.

The inner bushing 32 is pushed inside the outer bushing 30 until the top surface 58a and the ground surface 50a abut against each other.

Now, the rack 24 is inserted into the gear housing 28.

Subsequently or at the same time, the second bearing 40 is fitted on the input shaft 12.

Thereafter, the assembly of the input shaft 12, which carries the pinion 22 and the second bearing 40, is mounted to the gear housing 28.

Then, the tensioning plug 68 is threadingly engaged with the gear housing 28.

Finally, the ball joint 26 can be assembled to the rack 24.

After the assembly, the position and preload of the rack 24 can be adjusted.

By tensioning the tensioning plug 68, i.e. by rotating the tensioning plug 68 in a sense so that is moves towards the inside of the gear housing 28, also the inner bushing 32, which lies against the tensioning plug, is moved towards the inside of the gear housing 28.

In other words, the inner bushing 32 is pushed inside the outer bushing 30 via an essentially axial force exerted by the tensioning plug 68.

As the top surface 58a abuts against the ground surface 50a and both those surfaces are inclined by the angel a, the axial force is divided into two components.

A first, axial component is transmitted to the outer bushing 30 and pushes the outer bushing 30 against the spring 64.

A second, radial component is oriented in a direction from the first protrusion 58 towards the second protrusion 60. As the rack 24 is supported inside the inner bushing 32, it is loaded in this direction by the radial force component.

Due to the angular positions of the bushings 30, 32 and especially the inclined surfaces 50a, 58a, the radial load on the rack 24 is oriented in a direction towards the pinion 22.

Consequently, the rack 24 is preloaded against the pinion 22.

Additionally, the ratio of the radial force and the axial force component will correspond to the angle α. In order to find the corresponding equilibrium, the top surface 60a may slide upon the ground surface 50a.

Last but not least, the axial force component will be equilibrated by a spring force of the spring 64.

If during operation of the steering gear 10 wear occurs on the lateral inside surface 36 of the inner bushing, the position and preload of the rack 24 needs to be re-adjusted.

In the embodiment shown, this is done in a self-actuating manner.

As the spring 64 is loaded and therefore exercises an essentially constant axial force on the outer bushing 30, a constant radial force also is applied to the rack 24.

The same is true for the positioning of the rack 24.

If wear leads to surface abrasion on the lateral inside surface 36, the initial position of the rack 24 is kept by slightly pushing the inner bushing 32 further inside the outer bushing 30. Thereby the top surface 58a and the ground surface 50a slide upon each other so that the radial support given by the lateral inside surface 36 is kept stationary.

This self-actuating re-adjustment is powered by the spring 64 being pretensioned.

## Claims

1. Steering gear (10) for a vehicle, comprising
a rack-and-pinion-mechanism (20), wherein a pinion (22) thereof is adapted to be functionally coupled to a steering wheel (14) and a rack (24) thereof is adapted to be functionally coupled to at least one steerable wheel (18a, 18b) of the vehicle,
a gear housing (28) encasing the rack-and-pinion-mechanism (20),
an outer bushing (30), wherein a lateral outside surface (34) of the outer bushing (30) is supported in the gear housing (28),
an inner bushing (32), wherein the inner bushing (32) is at least partially received inside the outer bushing (30) and wherein a lateral inside surface (36) of the inner bushing (32) slidingly supports the rack (24),
**characterized in that**
on a lateral outside surface (56) of the inner bushing (32) or on a lateral inside surface (48) of the outer bushing (30), a first protrusion (58) is provided which extends generally parallel to a central axis (62) of the inner bushing (32) or a central axis (54) of the outer bushing (30) respectively, the first protrusion (58) having a top surface (58a), which is inclined with respect to the corresponding central axis (54, 62),
wherein the first protrusion (58) is received in a corresponding first slot (50) being provided on the lateral inside surface (48) of the outer bushing (30) or on the lateral outside surface (56) of the inner bushing (32) and extending generally parallel to the central axis (54) of the outer bushing (30) or the central axis (62) of the inner bushing (32) respectively, the first slot (50) having a ground surface (50a) which is inclined with respect to the corresponding central axis (54, 62), the top surface (58a) and the ground surface (50a) being inclined in corresponding directions and abutting against each other.

2. Steering gear (10) according to claim 1, **characterized in that** at least one second protrusion (60) is provided on the lateral outside surface (56) of the inner bushing (32) or on the lateral inside surface (48) of the outer bushing (30), which at least one second protrusion (60) extends generally parallel to the central axis (62) of the inner bushing (32) or the central axis (54) of the outer bushing (30) respectively, the second protrusion (60) having a top surface (60a), which is generally parallel to the corresponding central axis (54, 62),
wherein the at least one second protrusion (60) is received in a corresponding second slot (52) being provided on the lateral inside surface (48) of the outer bushing (30) or the lateral outside surface (56) of the inner bushing (32) and extending generally parallel to the central axis (54) of the outer bushing (30) or the central axis (62) of the inner bushing (32) respectively, the second slot (52) having a ground surface (52a), which is generally parallel to the corresponding central axis (54, 62).

3. Steering gear (10) according to claim 2, **characterized in that** the first protrusion (58) and the first slot (50) are wider than the second protrusion (60) and the second slot (52), respectively, when seen in the direction of the corresponding central axis (54, 62).

4. Steering gear (10) according to claim 2 or 3, **characterized in that**
the second protrusion (60) is located opposite the first protrusion (58) on the inner bushing (32) or on the outer bushing (30) and/or
the second slot (52) is located opposite the first slot (50) on the outer bushing (30) or on the inner bushing (32).

5. Steering gear (10) according to any of the previous claims, **characterized in that** the first protrusion (58) generally extends over the entire axial length of the inner bushing (32) or the outer bushing (30) and/or the first slot (50) generally extends over the entire axial length of the outer bushing (30) or the inner bushing (32).

6. Steering gear (10) according to any of the previous claims, **characterized in that** on the lateral outside surface (34) of the outer bushing (30) an anti-rotation protrusion (42) is provided, which is received in a corresponding anti-rotation depression (44) on the gear housing (28) in order to prevent rotation of the outer bushing (30) with respect to the gear housing (28).

7. Steering gear (10) according to any of the previous claims, **characterized in that** the first protrusion (58) and the first slot (50) and/or the second protrusion (60) and the second slot (52) act/acts as an anti-rotation-mechanism between the inner bushing (32) and the outer bushing (30).

8. Steering gear (10) according to any of the previous claims, **characterized in that** the outer bushing (30) and/or the inner bushing (32) generally has/have the form of a circumferentially closed circular ring.

9. Steering gear (10) according to any of the previous claims, **characterized in that** at least one resilient element (35), preferably an O-ring or a rubber band, is radially interposed between the lateral outside surface (34) of the outer bushing (30) and the gear housing (28).

10. Steering gear (10) according to any of the previous claims, **characterized in that** the inner bushing (32) and the outer bushing (30) are axially loaded against each other via a spring (64), preferably a spring washer.

11. Steering gear (10) according to claim 10, **characterized in that** one side (64a) of the spring (64) abuts against a shoulder (66) in the gear housing (28) and an opposite side (64b) of the spring (64) abuts against the outer bushing (30) or the inner bushing (32).

12. Steering gear (10) according to claim 10 or claim 11, **characterized in that** the spring (64), the inner bushing (32) and the outer bushing (30) form a re-adjustment mechanism adapted to re-adjust the position and/or the preload of the rack (24) and being powered by a pretension force of the spring (64).

13. Steering gear (10) according to any of the previous claims, **characterized in that** it comprises a tensioning plug (68) being threadingly engaged to the gear housing (28) and abutting against the outer bushing (30) or the inner bushing (32), wherein the tensioning plug (68) is movable in a direction generally parallel to the central axis (62) of the inner bushing (32) and/or the central axis (54) of the outer bushing (30) when being rotated with respect to the gear housing (28).

14. Steering gear (10) according to claim 13, **characterized in that** the tensioning plug (68) comprises an abutment surface (74) being adapted to interact with the rack (24) in order to limit a range of motion thereof.
